(19) **Europäisches Patentamt**

**European Patent Office**

**Office européen des brevets**

(11) Veröffentlichungsnummer : **0 145 957**
**B1**

(12) **EUROPÄISCHE PATENTSCHRIFT**

(45) Veröffentlichungstag der Patentschrift :
**15.06.88**

(21) Anmeldenummer : **84113709.4**

(22) Anmeldetag : **14.11.84**

(51) Int. Cl.⁴ : **G 01 S 17/00, G 01 B 11/14**

(54) Verfahren und Vorrichtung zur berührungslosen Vermessung von Objekten.

(30) Priorität : **25.11.83 DE 3342675**

(43) Veröffentlichungstag der Anmeldung :
**26.06.85 Patentblatt 85/26**

(45) Bekanntmachung des Hinweises auf die Patenterteilung : **15.06.88 Patentblatt 88/24**

(84) Benannte Vertragsstaaten :
**CH DE FR GB LI**

(56) Entgegenhaltungen :
**DE-A- 2 113 522**
**DE-A- 2 903 529**
**FR-A- 2 526 936**
**US-A- 4 411 528**

(73) Patentinhaber : **Firma Carl Zeiss**
**D-7920 Heidenheim (Brenz) (DE)**
**CH DE FR LI**
**CARL-ZEISS-STIFTUNG trading as CARL ZEISS**

**D-7920 Heidenheim (Brenz) (DE)**
**GB**

(72) Erfinder : **Ferrano, Gert, Dr.**
**Spechtweg 9**
**D-7080 Aalen 1 (DE)**

**Beschreibung**

Bei der Vermessung von Werkstücken mit empfindlichen Oberflächen wie z. B. Ton- oder Wachsmodellen können die üblicherweise verwendeten mechanischen Tastköpfe von Mehrkoordinaten-Meßmaschinen nicht ohne weiteres verwendet werden, da die Gefahr besteht, daß die Oberfläche des Prüflings durch den Taststift verkratzt oder verformt wird. Für dieses Meßproblem sind am besten berührungslos arbeitende Antastverfahren geeignet.

So ist es beispielsweise aus der DE-A-2 903 529 und der DE-A-2 113 522 bekannt, Objekte zu vermessen, indem ein meist punktförmiger Lichtfleck unter einem Winkel zur Flächennormalen auf das Objekt projiziert und mit Hilfe einer zum Projektionsstrahlengang geneigten Abbildungsoptik ein Bild des Lichtflecks auf einem positionsempfindlichen, photoelektrischen Detektor erzeugt wird. Aus der Lage des Bildes des Lichtflecks bestimmt man dann durch Triangulation den Abstand zu dem gerade beleuchteten Punkt des Werkstücks. Zur Durchführung dieses Verfahrens ist es außerdem bekannt den Projektor und das Abbildungssystem zu einer Baugruppe zusammenzufassen, die oft als « optischer Tastkopf » bezeichnet wird. Zur Vermessung des Objekts kann dieser Tastkopf durch geeignete Führungssysteme über das Objekt bewegt werden.

Nach diesem Verfahren läßt sich jedoch nur dann die Objektentfernung fehlerfrei ermitteln, wenn sich der Winkel, den die Objektfläche mit den Achsen des Tastkopfs bildet, nicht ändert oder, wenn der Tastkopf dem Werkstück so nachgeführt wird, daß das Bild des projizierten Lichtflecks stets im Zentrum des Detektors erscheint. Andernfalls treten Meßfehler auf, da die Ablage des Lichtflecks von der Mittenposition nicht nur von der Objektentfernung sondern auch vom Winkel zwischen der Objektebene und der Projektionsachse abhängt. Eine permanente Nachführung des Tastkopfs entlang der Objektkontur bedingt jedoch einen hohen regeltechnischen Aufwand und beschränkt außerdem wegen der zu beschleunigenden Massen die Meßgeschwindigkeit.

Aus der FR-A-2 526 936 ist eine Vorrichtung zur berührungslosen Abstandsmessung bekannt, die einen ausgedehnten Lichtfleck unter einem Winkel zur Beobachtungsrichtung auf das Werkstück projiziert und einen zweidimensionalen Bildsensor besitzt, auf den die beleuchtete Objektstelle von einer Optik abgebildet wird.

Der Bildsensor der bekannten Vorrichtung ist zwar an ein Bildanalysegerät angeschlossen, das aus der Verschiebung des Lichtfleckes auf dem Sensor den Objektabstand ermittelt, es ist jedoch nicht möglich mit diesem Gerät die Neigung der Objektfläche gegen die Beobachtungsrichtung festzustellen.

Es ist die Aufgabe der vorliegenden Erfindung ein Meßverfahren der eingangs genannten Art anzugeben, das es erlaubt den Meßfehler aufgrund von Neigungen der Objektfläche zu eliminieren.

Diese Aufgabe wird gemäß dem Kennzeichen des Hauptanspruches dadurch gelöst, daß zusätzlich die Abweichung der Form bzw. Größe des Lichtflecks von einem vorgegebenen Sollmaß ermittelt und daraus die Neigung der Flächennormalen des Objekts gegen die Beobachtungsrichtung bestimmt und bei der Berechnung des Objektabstandes mit berücksichtigt wird.

Der Vorteil dieser Lösung, gemessen am bekannten Stand der Technik ist darin zu sehen, daß bei gleicher Meßgenauigkeit eine Erhöhung der Meßgeschwindigkeit erzielt werden kann, da die Neigung der Objektebene nicht exakt ausgeregelt werden muß, sondern in das Meßergebnis eingerechnet werden kann. Schließlich steht die ermittelte Neigung als zusätzlicher Meßwert bei jedem Antastvorgang zur Verfügang, während er nach dem Stand der Technik indirekt aus mehreren Abstandsmessungen hätte ermittelt werden müssen.

Zur Bestimmung der Form bzw. Größe des Bildes des Lichtflecks kann mit Vorteil auf die an sich bekannten, zum Teil videoschnellen Verfahren zur Fernsehbildanalyse zurückgegriffen werden. Demzufolge ist es zweckmäßig als Detektor eine Fernsehkamera einzusetzen. Dabei kann es sich sowohl um eine herkömmliche Röhrenkamera als auch um eine sog. Halbleiterkamera handeln, die beispielsweise ein zwei-dimensionales, sog. CCD-Array enthält.

Besonders zweckmäßig ist es, wenn zur Bestimmung der Größe des Lichtflecks eine Flächenmessung durchgeführt wird, da dann Unregelmäßigkeiten der Objektoberfläche ausgemittelt werden.

Weitere vorteilhafte Ausgestaltungen der Erfindung sind in den Unteransprüchen dargestellt und werden nachfolgend anhand der Figuren 1-5 der beigefügten Zeichnungen näher erläutert :

Fig. 1 zeigt ein Ausführungsbeispiel der erfindungsgemäßen Vorrichtung ;

Fig. 2-4 sind Prinzipskizzen zur Verdeutlichung der geometrischen Verhältnisse bei der Bestimmung des Abstandes der Vorrichtung aus Fig. 1 von einem Meßobjekt ;

Fig. 5 skizziert Lage und Form des Lichtflecks auf der lichtempfindlichen Fläche des in der Vorrichtung nach Fig. 1 verwendeten Sensors.

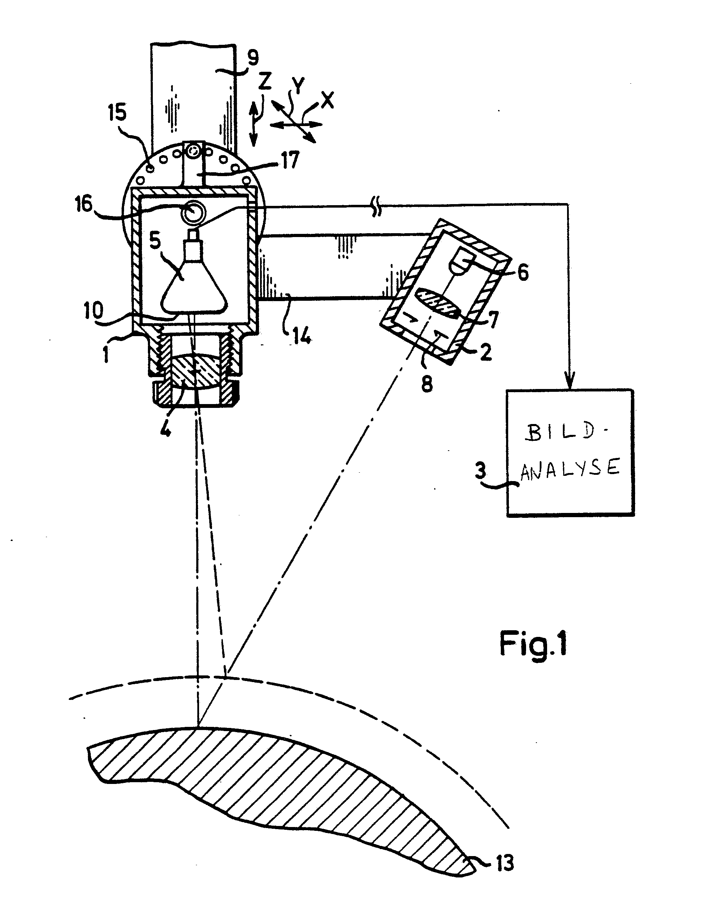

Die in Fig. 1 dargestellte Vorrichtung besteht im wesentlichen aus einer Fernsehkamera 1 und einem über einen Träger 14 mit dem Kameragehäuse 1 fest verbundenen Projektor 2, der mit seiner Projektionsachse gegen die Beobachtungsrichtung der Kamera 1 geneigt angeordnet ist.

Die aus Kamera 1 und Projektor 2 bestehende Baueinheit ist an der in allen Raumrichtungen bewegbaren Pinole 9 einer Mehrkoordinatenmeßmaschine befestigt. Sie kann mit Hilfe einer Rasteinrichtung 15/17 um eine Achse 16 in definierte Winkelstellungen relativ zu der Oberfläche des zu vermessenden Objekts 13 verschwenkt werden.

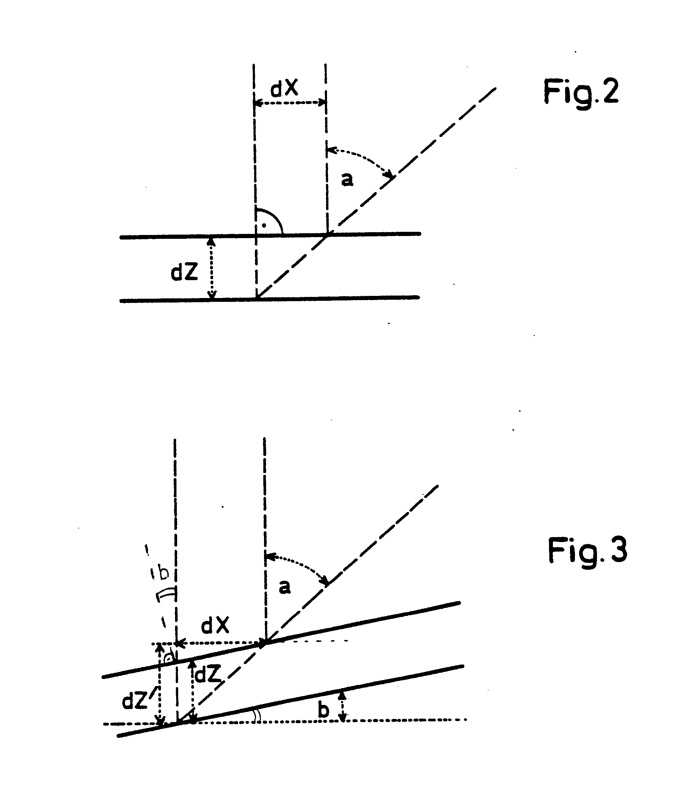

Der Projektor 2 enthält eine Leucht- oder Laserdiode 6, die nach Kollimation durch die Optik 7 ein von einer Blende 8 begrenztes Lichtbündel aussendet. Der Durchmesser des so auf das Objekt projizierten Lichtflecks ist im wesentlichen entfernungsunabhängig. Er wird über das Objektiv 4 der Kamera 1 auf die Kathode 10 einer Fernsehröhre 5 abgebildet. Die Kamera 1 ist an ein Bildanalysegerät 3 angeschlossen, das aus Lage und Form des Bildes des projizierten Lichtflecks und dem Winkel, den die Achsen von Projektor und Kamera bilden, den Abstand zum Objekt 13 ermittelt. Dieser Vorgang soll nachfolgend anhand der Figuren 2-5 näher erläutert werden :

In der Prinzipskizze nach Fig. 2 ist der einfache Fall dargestellt, daß die Beobachtungsrichtung mit der Flächennormalen des Objekts 13 zusammenfällt. Für diesen Fall läßt sich eine Änderung dZ des Objektabstandes allein aus der Verschiebung dX des unter dem Winkel a projizierten Lichtflecks zu

$$dZ = \frac{dX}{\tan (a)},\qquad (1)$$

ermitteln. Bekannte optische Tastköpfe messen die Verschiebung des Lichtflecks mit Hilfe eines meist eindimensionalen Positionsdetektors und nutzen diese einfache Beziehung (1) zur Bestimmung der Objektentfernung aus. Allerdings muß dort während des Meßvorganges sichergestellt werden, daß auch tatsächlich in Normalenrichtung angetastet wird. Andernfalls treten Meßfehler auf, denn für den Fall, daß die Flächenormale des Objekts unter einem Winkel b gegen die Beobachtungsrichtung geneigt ist, gilt die Näherung (1) nicht mehr. Es ist vielmehr ein vom Neigungswinkel b abhängiges Glied zu subtrahieren und es gilt :

$$dZ = \frac{dX}{\tan (a)} - dX \cdot \tan (b),\qquad (2)$$

was sich anhand der in Fig. 3 skizzierten geometrischen Verhältnisse leicht nachvollziehen läßt.

Der Winkel b ist in der Regel unbekannt und kann während des Meßvorganges, wenn sich der Tastkopf über das Meßobjekt bewegt, laufend schwanken. Zu seiner Ermittlung wird im Bildanalysegerät 3 (Fig. 1) die Form des Bildes des auf die Objektoberfläche 13 projizierten Lichtflecks ausgewertet.

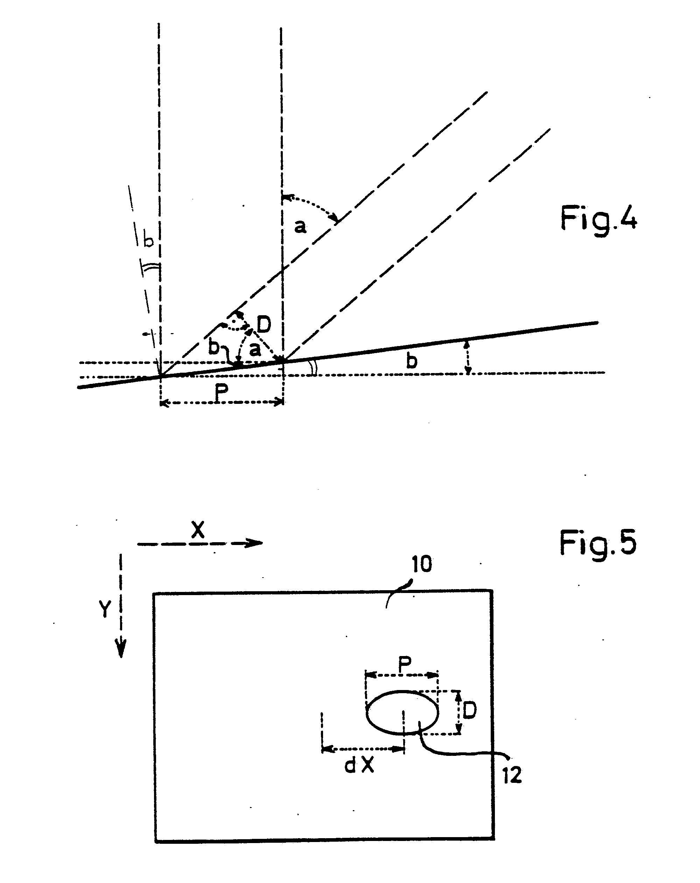

Das von der Blende 8 kreisförmig begrenzte Lichtbündel, das der Projektor 2 aussendet, zeichnet auf der Objektoberfläche infolge der geneigten Projektionsachse einen elliptischen Lichtfleck, der dann auf die Kathode 10 der Röhre 5 abgebildet wird. Fig. 5 verdeutlicht dies. Das Bild 12 dieses Flecks ist gegenüber dem Zentrum der Aufnahmeröhre außerdem um den u.a. abstandsabhängigen Wert dX verschoben.

Es besteht nun folgender Zusammenhang zwischen dem Achsverhältnis D/P der Ellipse 12, dem Projektionswinkel a und dem Neigungswinkel b, der aus der geometrischen Darstellung in Fig. 4 abgeleitet werden kann :

$$\tan b = \frac{1}{\tan (a)} - \frac{D}{P} \cdot \frac{1}{\sin (a)}\qquad (3)$$

Zur Bestimmung des Neigungswinkels b führt das Bildanalysegerät 3 eine Flächenmessung des Bildes 12 des Lichtflecks durch. Bei diesem Bildanalysegerät kann es sich beispielsweise um eines mit der Bezeichnung « Mikrovideomat 3 » der Firma Carl Zeiss, Oberkochen handeln.

Da die Fläche F der Ellipse den Achsen P und D direkt proportional ist und die kleine Achse D infolge der Projektionsgeometrie konstant bleibt, kann aus der Fläche F der Neigungswinkel b eindeutig berechnet werden. Weiterhin ermittelt das Bildanalysegerät 3 die Verschiebung dX des Schwerpunkts der Ellipse 12. Aus diesen beiden Meßwerten dX und F läßt sich der Abstand des Tastkopfs vom Werkstück 13 auch für den allgemeinen Fall der zur Beobachtungsrichtung geneigten Flächennormalen exakt berechnen. Durch Einsetzen von (3) in (2) ergibt sich

$$dZ = \frac{K}{\sin (a)} \cdot \frac{dX}{F},\qquad (4)$$

wobei K eine Konstante ist, die der Fläche $\Pi/4 \, D^2$ des projizierten Lichtbündels entspricht. Diese Konstante ist durch die Blende 8 bestimmt und kann leicht mit einer geeigneten Eichmethode ermittelt werden.

Beim Vermessen des Prüflings 13, beispielsweise einer Autokarosserie, wird der aus den drei Bauteilen 1, 2 und 14 bestehende Tastkopf von der Meßmaschine, an der er befestigt ist, kontinuierlich entlang der zu messenden Kontur bewegt. Dabei wird der vom Tastkopf bzw. dem Bildanalysegerät 3 ermittelte Wert dZ fortlaufend den Meßwerten der Wegmeßsysteme in den drei Achsen der Meßmaschine addiert. Es ist klar, daß in dem in Fig. 1 dargestellten Fall, bei dem der Tastkopf allein in Richtung der Z-Achse der Maschine mißt, der Meßwert des Tasters nur mit den Werten des entsprechend für die Z-Achse vorgesehenen Meßsystems der Mehrkoordinatenmeßmaschine verrechnet zu werden braucht. Bei einem Schwenken des Tastkopfs um die Achse 16 ist jedoch auch eine Einbeziehung der anderen Koordinate X je nach Größe des Schwenkwinkels vorzunehmen.

Eine exakte Nachführung der Lage des Tastkopfs in Z-Richtung entlang der Kontur des Objekts 13 ist nicht erforderlich, solange sich das Bild des auf das Objekt 13 projizierten Lichtfleckes auf dem nutzbaren Bereich der Kathode 10 der Fernsehröhre 5 befindet. Erst bei einem Auswandern des Lichtflecks, d. h. bei relativ großen Unregelmäßigkeiten der Objektoberfläche, ist ein Nachführen des Tastkopfs erforderlich.

Durch die Rasteinrichtung 15, 17 ist sichergestellt, daß auch relativ stark gegen die Z-Achse geneigte Seitenflächen des Werkstücks 13 mit Hilfe des optischen Tastkopfs vermessen werden können.

In einer weiteren, hier nicht dargestellten Ausbaustufe kann ein zweiter Projektor vorgesehen sein, dessen Projektionsachse mit der Optischen Achse der Kamera 1 in der Z-Y-Ebene einen Winkel bildet.

Diese Erweiterung ermöglicht es die Neigung der Objektebene 13 nicht nur bezüglich einer Koordinate, sondern auch in der dazu senkrechten Richtung zu messen.

Um ein Überlappen der beiden Lichtflecke auf dem Schirm 10 der Röhre 5 zu verhindern, können die Lichtquellen 6 der beiden Projektoren z. B. alternierend getaktet angesteuert werden.

**Patentansprüche**

1. Verfahren zur berührungslosen Vermessung von Objekten wie z. B. Werkstücken, bei dem ein Lichtfleck auf das Objekt (13) projiziert wird, mit Hilfe einer zum Projektionsstrahlengang geneigten Abbildungsoptik (4) ein Bild (12) des Lichtflecks auf einem positionsempfindlichen, photoelektrischen Detektor (10) erzeugt und aus der Lage des Lichtflecks durch Triangulation der Abstand zwischen der Abbildungsoptik und dem Objekt (13) bestimmt wird, dadurch gekennzeichnet, daß zusätzlich die Abweichung der Form bzw. Größe des Lichtflecks (12) von einem vorgegebenen Sollmaß ermittelt, daraus die Neigung (b) der Flächennormalen des Objekts gegen die Beobachtungsrichtung bestimmt und bei der Berechnung des Objektabstandes mitberücksichtigt wird.

2. Verfahren nach Anspruch 1, dadurch gekennzeichnet, daß als Detektor eine Fernsehkamera (5) verwendet ist und die Messung der Form bzw. Größe des Lichtflecks (12) mit den an sich bekannten Mitteln der Fernsehbildanalyse durchgeführt wird.

3. Verfahren nach Anspruch 2, dadurch gekennzeichnet, daß zur Bestimmung der Lage des Lichtflecks (12) dessen Schwerpunktskoordinaten (dX) ebenfalls durch Fernsehbildanalyse ermittelt werden.

4. Vorrichtung zur Durchführung des Verfahrens nach einem der Ansprüche 1-3, mit einem Projektor (2), der einen Lichtfleck auf das Objekt (13) projiziert, einer zum Projektionsstrahlengang geneigten Abbildungsoptik (4), hinter der ein positionsempfindlicher Detektor (5, 10) angeordnet ist, und einer die Signale des Detektors verarbeitenden Recheneinheit (3), die ein Bildanalysegerät zur Bestimmung der Form bzw. Größe des Bildes (12) des Lichtflecks enthält, dadurch gekennzeichnet, daß das Bildanalysegerät Mittel zur Bestimmung der Neigung (b) der Flächennormalen des Objekts gegen die Beobachtungsrichtung, sowie Mittel zur Berücksichtigung dieser Neigung (b) bei der Berechnung des Objektabstandes enthält.

5. Vorrichtung nach Anspruch 4, dadurch gekennzeichnet, daß der Detektor eine Röhrenkamera (5) oder eine zwei-dimensionale CCD-Kamera ist.

6. Vorrichtung nach Anspruch 5, dadurch gekennzeichnet, daß der Projektor (2) und die Kamera (1) zu einer Baueinheit zusammengefaßt sind.

7. Vorrichtung nach Anspruch 6, dadurch gekennzeichnet, daß die Baueinheit (1, 2, 14) in mehreren Koordinatenrichtungen verschiebbar und um mindestens eine Achse (16) verschwenkbar gelagert ist.

8. Vorrichtung nach Anspruch 7, gekennzeichnet durch Rasten (15) zur definierten Einstellung des Schwenkwinkels der Baueinheit (1, 2, 14).

9. Vorrichtung nach Anspruch 6, gekennzeichnet durch die Befestigung der Baueinheit am verschiebbaren Arm (9) einer Mehrkoordinaten-Meßmaschine.

**Claims**

1. Method for non-contact measurement of objects such as workpieces, in which a light spot is projected onto object (13), and in which an image (12) of the light spot is generated on a location-sensitive, photoelectric detector (10) using imaging optics (4) inclined at an angle to the projection beam path, and in which the distance between the imaging optics and the object (13) is determined from the location of the light spot using triangulation ; characterized by the fact that the deviation of the shape and size of the light spot (12) from a specified nominal value is also determined and that the angle (b) of the surface normal of the object with the observation direction is derived from this deviation and is taken into account in the calculation of the object distance.

2. Method according to claim 1, characterized by the fact that a TV camera (5) is used as the detector and that the measurement of the shape and the size of the light spot (12) is performed using the well-known means of TV image analysis.

3. Method according to claim 2, characterized by the fact that the centre of gravity coordinates (dX) of the light spot (12) are also determined using TV image analysis in order to establish its location.

4. Device for implementing the method according to one of the claims 1-3, comprising a projector (2) which projects a light spot onto the object (13), imaging optics (4) inclined at an angle to the projection beam path, a location-sensitive detector (5, 10) set up behind these optics, and a computer (3) which processes the detector signals and contains an image analysis unit for the determination of the shape and size of the image (12) of the light spot, characterized by the fact that the image analysis unit contains means for determining the angle (b) made by the surface normal of the object with the observation direction, and means for taking into account this angle (b) in the calculation of the object distance.

5. Device according to claim 4, characterized by the fact that the detector is a tube camera (5) or a two-dimensional CCD camera.

6. Device according to claim 5, characterized by the fact that the projector (2) and the camera (1) are combined to form a single unit.

7. Device according to claim 6, characterized by the fact that the unit (1, 2, 14) is mounted to move in several coordinate directions and to pivot about at least one axis (16).

8. Device according to claim 7, characterized by the fact that positioning indexes (15) are provided to permit defined setting of the pivot angle of the unit (1, 2, 14).

9. Device according to claim 6, characterized by the fact that the unit is mounted on the movable arm (9) of a coordinate measuring machine.

**Revendications**

1. Procédé pour faire le levé, sans contact, d'objets, de pièces par exemple, selon lequel on projette une tache lumineuse sur l'objet (13), on forme une image (12) de la tache lumineuse sur un détecteur photoélectrique (10) sensible à la position de la tache, à l'aide d'une optique de reproduction inclinée sur le faisceau de projection, et on détermine la distance entre l'optique de reproduction et l'objet (13) par triangulation à partir de la position de la tache lumineuse, caractérisé en ce que l'on détermine en plus l'écart de la forme ou de la grandeur de la tache lumineuse (12) par rapport à une cote de consigne préfixée, on établit l'inclinaison (b) de la normale à la surface de l'objet par rapport à la direction d'observation à partir de cet écart et on en tient compte dans le calcul de l'éloignement de l'objet.

2. Procédé selon la revendication 1, caractérisé en ce que l'on utilise une caméra de télévision (5) comme détecteur et on mesure la forme ou la grandeur de la tache lumineuse (12) par les moyens en eux-mêmes connus de l'analyse des images de télévision.

3. Procédé selon la revendication 2, caractérisé en ce que, pour établir la position de la tache lumineuse (12), on détermine les coordonnées (DX) de son centre de gravité, également par une méthode d'analyse des images de télévision.

4. Dispositif pour la mise en œuvre du procédé selon une des revendications 1 à 3, comprenant un projecteur (2) qui projette une tache lumineuse sur l'objet (13), une optique de reproduction (4), inclinée par rapport au faisceau de projection, derrière laquelle est placé un détecteur (5, 10) sensible à la position de la tache, ainsi qu'une unité arithmétique (3) traitant les signaux du détecteur et qui contient un appareil analyseur d'image pour déterminer la forme ou la grandeur de l'image (12) de la tache lumineuse, caractérisé en ce que l'appareil analyseur d'image contient des moyens pour établir l'inclinaison (b) de la normale à la surface de l'objet par rapport à la direction d'observation, de même que des moyens pour tenir compte de cette inclinaison (b) dans le calcul de l'éloignement de l'objet.

5. Dispositif selon la revendication 4, caractérisé en ce que le détecteur est une caméra à tube cathodique (5) ou une caméra à dispositif bidimensionnel de couplage de charge.

6. Dispositif selon la revendication 5, caractérisé en ce que le projecteur (2) et la caméra (1) sont réunis en un ensemble.

7. Dispositif selon la revendication 6, caractérisé en ce que l'ensemble (1, 2, 14) est monté déplaçable suivant plusieurs axes et de façon à pouvoir être tourné autour d'au moins un axe (16).

8. Dispositif selon la revendication 7, caractérisé par des éléments d'arrêt (15) pour l'ajustement défini de l'angle d'inclinaison de l'ensemble (1, 2, 14).

9. Dispositif selon la revendication 6, caractérisé en ce que l'ensemble est fixé au bras mobile (9) d'une machine de mesure à plusieurs coordonnées.

Fig.1

Fig.2

Fig.3

Fig.4

Fig.5